# EUROPÄISCHE PATENTANMELDUNG

(11) **EP 1 209 120 A2**
(43) Veröffentlichungstag der Anmeldung: **29.05.2002**
(21) Anmeldenummer: 01890326.0
(22) Anmeldetag: 26.11.2001
(51) Int. Cl.: C01B 3/04, H01M 8/06

(54) **Verfahren und Vorrichtung zur Herstellung von Brenngas**

(30) Priorität: 24.11.2000 AT 19832000
(71) Anmelder: Wancura, Herbert, 8055 Graz-Neuseiersberg (AT)
(72) Erfinder: Wancura, Herbert, 8055 Graz-Neuseiersberg (AT)
(74) Vertreter: Laminger, Norbert, Mag.

(57) **Zusammenfassung**

Ein Verfahren zur verbesserten Herstellung eines Brenngases für die Energieerzeugung und vorzugsweise für den Betrieb von Energieerzeugungsmaschinen bzw. -anlagen aller Art, insbesondere für Verbrennungskraftmaschinen und/oder Brennstoffzellen, soll die einfachere und sichere Speicherung des primären Energieträgers erlauben und ein Brenngas liefern, welches die Energieerzeugung mit erhöhtem Wirkungsgrad und verminderten Emissionen ermöglicht.

Diese Aufgabe wird dadurch gelöst, dass Ammoniak als primäres Energieträgerfluid verwendet, einem thermischen Cracking-Prozeß unterworfen und unter katalytischer Aufspaltung in molekularen Wasserstoff und molekularen Stickstoff umgewandelt wird. Damit ist die Ausbildung einer kompletten Energiekonverterkette mit welcher Ammoniak als Kraftstoff bzw. Energie/Wasserstoffträger gegeben.

## Beschreibung

Die Erfindung betrifft ein Verfahren zur Herstellung von Brenngas, ein Verfahren zum Betreiben einer Maschine oder Anlage zur Erzeugung von elektrischer, thermischer oder kinetischer Energie, insbesondere einer Verbrennungskraftmaschine und/oder einer Brennstoffzelle, sowie eine Vorrichtung zur Herstellung von Brenngas und eine Maschine oder Anlage zur Erzeugung von elektrischer, thermischer oder kinetischer Energie, insbesondere eine Verbrennungskraftmaschine und/oder Brennstoffzelle.

Für die Energieumwandlung sowohl im stationären als auch im mobilen Bereich werden heute primär Kohlenwasserstoffe als Energieträger eingesetzt. Diese sind endlich und es wird derzeit nach Alternativen gesucht. Die wahrscheinlichste Alternative ist Wasserstoff, welcher jedoch erhebliche Probleme bei Lagerung und Transport aufweist (hohe Druckerfordernisse wegen Speicherung bei 300 bar und mehr; oder Verflüssigung bei extrem niedrigen Temperaturen ∼20 - 30°K). Die Hochdruckspeicherung entspricht dem Stand der Technik für Druckspeicherung von Gasen, insbesondere Erdgas, schafft aber nur begrenzte Speicherdichten. Die kryogene Speicherung erzielt höhere Speicherdichten, erfordert aber sehr hohen Energieeinsatz zur Verflüssigung und weist darüber hinaus Langzeitverluste durch Leckagen infolge der Erwärmung auf, welcher dazu führen kann, dass z.B. ein Fahrzeug, welches ca. 2 Wochen abgestellt wurde, nur mehr unzureichende Wasserstoffmengen im Tank aufweist.

Daher werden derzeit weltweit Versuche mit alternativen Wasserstoffträgern, insbesondere Methanol durchgeführt. Diese Versuche haben gemeinsam, dass durch das im Brennstoff enthaltene C-Atom die von der Verbrennungskraftmaschine bekannten Emissionsprobleme unvermeidlich sind (CO; CO₂, manchmal auch HC Bildung).

Die Aufgabe der vorliegenden Erfindung war daher ein Verfahren zur verbesserten Herstellung eines Brenngases für die Energieerzeugung und vorzugsweise für den Betrieb von Energieerzeugungsmaschinen bzw. -anlagen aller Art, insbesondere für Verbrennungskraftmaschinen und/oder Brennstoffzellen, welches Verfahren die einfachere und sichere Speicherung des primären Energieträgers erlaubt und ein Brenngas liefert, welches einerseits die Energieerzeugung mit erhöhtem Wirkungsgrad und dennoch wesentlich verminderten Emissionen ermöglicht und dabei leicht und sicher speicher- bzw. bei mobilen Anlagen mitführbar ist. Eine weitere Aufgabe waren eine Vorrichtung, mit welcher unter Erzielung der oben genannten Vorteile einfach und sicher ein derartiges Brenngas herstellbar ist, sowie eine sicher betreibbare Maschine oder Anlage zur Energieerzeugung, insbesondere eine Verbrennungskraftmaschine und/oder Brennstoffzelle mit hohem Wirkungsgrad und verbesserten Emissionswerten.

Diese Aufgabe wird erfindungsgemäß bei einem Verfahren zur Herstellung von Brenngas, insbesondere für eine Verbrennungskraftmaschine oder eine Brennstoffzelle, bei welchem ein Energieträgerfluid durch chemische und/oder physikalische Prozesse umgewandelt und allenfalls gereinigt wird, dadurch gelöst, dass Ammoniak als primäres Energieträgerfluid einem thermischen Cracking-Prozeß unterworfen und unter katalytischer Aufspaltung in molekularen Wasserstoff und molekularen Stickstoff umgewandelt wird. Die Erfindung beruht also auf der Ausbildung einer kompletten Energiekonverterkette, welcher Ammoniak (NH3) als Kraftstoff bzw. Energie/Wasserstoffträger zugrunde liegt. Ammoniak enthält einen hohen Wasserstoffanteil und kein Kohlenstoffatom, so dass die Emissionen an Kohlenwasserstoffen bei Verwendung des erfindungsgemäß hergestellten Brenngases weitestgehend reduziert sind, d.h. nur durch den Gehalt in anderen, für die nachfolgende Energieerzeugung notwendigen Reagenzien, Verbrennungsgasen od. dgl. bestimmt wird.

Gemäß einem weiteren Merkmal der Erfindung wird verflüssigter Ammoniak als Energieträgerfluid verwendet und vor dem Cracking-Prozeß verdampft. Ammoniak ist bei Umgebungstemperatur und einem Druck von ca. 20 bar verflüssigbar, ist also wesentlich einfacher und sicherer handhabbar als flüssiger Wasserstoff. Seine Flüssiggaseigenschaften sind in bezug auf den Siedeverlauf denen von LPG sehr ähnlich. Der Heizwert verflüssigten Ammoniaks entspricht etwa jenem von Methanol.

Für eine besonders gute Umsetzung wird gemäß einem weiteren Merkmal der Erfindung der thermische Cracking-Prozeß unter Verwendung eines Platin- und/oder Ruthenium-Katalysatormaterials durchgeführt.

Dabei ist vorteilhafterweise vorgesehen, dass der thermische Cracking-Prozeß bei einer Temperatur zwischen 500°C und 1500°C stattfindet, vorzugsweise zwischen 800°C und 1200°C.

Gemäß einer vorteilhaften Ausführungsvariante des erfindungsgemäßen Verfahrens wird anschließend an den thermischen Cracking-Prozeß der molekulare Stickstoff zumindest teilweise abgetrennt. Damit wird das Verhältnis des Energieträgers Wasserstoff gegenüber der inerten Komponente Stickstoff erhöht und somit der Wirkungsgrad der Verbrennung verbessert. Gleichzeitig wird damit die Stickoxid-Bildung soweit als möglich verhindert und ist nur mehr durch den Anteil des Stickstoffes in der Verbrennungsluft oder anderen, für die Energieerzeugung notwendigen Substanzen oder Reagenzien bestimmt. Doch nicht nur der molekulare Stickstoff, sondern alle Stickstoff-Verbindungen werden vorteilhafterweise vor der Weiterverwendung der aus dem thermischen Cracking-Prozeß kommenden Fluida abgetrennt, so insbesondere nicht gespalteter Ammoniak. Das ist besonders für den Betrieb von Brennstoffzellen, speziell der PEM-Zellen, von Vorteil, welche extrem ammoniakempfindlich sind und bei welchen schon 13 ppm NH₃ zur Zerstörung der Zelle führen können.

Vorteilhaftweise erfolgt die Abtrennung des molekularen Stickstoffs in einer Filterstufe. Das Filter kann dabei insbesondere als Membranfilter oder unter Ausbildung einer Wabenstruktur aufgebaut sein.

Besonders gute Abtrennraten bis hin zur vollständigen Separation von Wasserstoff und Stickstoff sind möglich, wenn die Abtrennung unter Verwendung von Palladium oder einer Palladiumlegierung durchgeführt wird. Natürlich sind auch andere Materialien anwendbar, welche gleiche bzw. ähnliche Eigenschaften aufweisen.

Das erfindungsgemäße Verfahren zum Betreiben einer Maschine oder Anlage zur Erzeugung von elektrischer, thermischer oder kinetischer Energie, insbesonders Verbrennungskraftmaschine und/oder Brennstoffzelle, bei welcher die in einem Brenngas, allenfalls aus einem Energieträgerfluid durch chemische und/oder physikalische Prozesse und allenfalls nach einer Reinigung bereitgestellt, enthaltene chemische Energie umgewandelt wird, ist zur sicheren Energieerzeugung mit sehr geringen Emissionswerten und hohem Wirkungsgrad dadurch gekennzeichnet, dass das Brenngas nach einem Verfahren bereitgestellt wird, wie es in den vorhergehenden Absätzen beschrieben ist. Damit ist eine Energieerzeugung bei geringstmöglichen Emissionswerten realisierbar, welche bei Stickstoffabtrennung noch weiter verbessert werden können, bei gleichzeitiger Anhebung des Wirkungsgrades. Gegenüber der Energieerzeugung unter Verwendung von Wasserstoff hat das erfindungsgemäße Verfahren die Vorteile der wesentlich sichereren und einfacheren Handhabung und Aufbewahrung bzw. Zwischenspeicherung. Das erfindungsgemäße Verfahren kann auf Energieerzeugungsanlagen aller Art angewandt werden, d.h. von Verbrennungskraftmaschinen mit Hub- oder Rotationskolbenmotoren, Gasturbinen oder Gasbrenner, aber auch für Brennstoffzellen oder ähnliche Anlagen zur direkten Erzeugung von elektrischer aus chemischer Energie. Auch Kombinationsanlagen sind mit dem erfindungsgemäßen Verfahren betreibbar, so etwa Verbrennungsmotoren mit Brennstoffzelle(n) als Hilfsenergiequelle für Nebenaggregate, beispielsweise in der Anwendung für Fahrzeuge, wo die Verbrennungskraftmaschine für den Antrieb genutzt wird, die Brennstoffzelle für beispielsweise Lichtanlage, Klimaanlage, usw.

Wenn gemäß einem weiteren Erfindungsmerkmal die Verbrennungsabgase einer selektiven katalytischen Reduktion mit Ammoniak als Reduktionsmittel unterzogen werden, ist damit der Vorteil verbunden, dass ein ohnedies - als Energieträger - verwendeter und verfügbarer Stoff für die Abgasreinigung ebenfalls herangezogen werden kann und keine zusätzlichen Chemikalien, Substanzen und entsprechende Vorratsbehälter nötig sind.

Vorteilhafterweise wird dabei der Ammoniak für die selektive katalytische Reduktion vom Strom des primären Energieträgerfluids vor dem thermischen Cracking-Prozeß abgezweigt und der Reduktionsstufe zugeführt.

Zu Herstellung von Brenngas, insbesondere für eine Maschine oder Anlage zur Erzeugung von elektrischer, thermischer oder kinetischer Energie, insbesondere für eine Verbrennungskraftmaschine und/oder eine Brennstoffzelle, in erfindungsgemäßer Weise ist eine Vorrichtung mit einem Tank oder einer Zuleitung für ein primäres Energieträgerfluid und allenfalls einer Reinigungseinheit gekennzeichnet durch einen Tank oder eine Zuleitung für Ammoniak als primäres Energieträgerfluid und einen thermischen Cracker für Ammoniak.

Für eine besonders einfache und gute Handhabung des primären Energieträgerfluids und dessen sichere Aufbewahrung ist es vorteilhaft, wenn ein Tank für verflüssigten Ammoniak und ein dem thermischen Cracker vorgeschalteter Verdampfer vorgesehen sind. Der Verdampfer kann dabei auf verschiedenste Weise realisiert sein, so etwa auch durch ein passives Element, etwa ein einfaches Reduktionsventil.

Dabei enthält der Cracker vorzugsweise und zur wirkungsvollen und einfachen Umsetzung des Ammoniaks ein Katalysatormaterial.

Besonders gut bewährt im Sinne einer möglichst vollständigen Aufspaltung des Ammoniaks in seine Bestandteile hat sich ein Platin und/oder Ruthenium enthaltendes Katalysatormaterial.

Gleichzeitig mit einer Erhöhung des Wirkungsgrades können auch die Emissionswerte - durch weitestgehende Vermeidung von Stickoxidbildung - bei der Energieerzeugung gesenkt werden, wenn gemäß einem weiteren Merkmal der Erfindung bereits in der Vorrichtung zur Herstellung des Brenngases eine Abtrenneinheit für molekularen Stickstoff dem thermischen Cracker nachgeschaltet ist. Durch die Abtrennung des Stickstoffes, d.h. des inerten Anteiles der Ausgangsstoffe des Crack-Prozesses, wird auch nur der Energieträger Wasserstoff mit entsprechend höherer Energiedichte weiter verwendet, so dass auch der Wirkungsgrad der Energieerzeugung in bezug auf die Menge des primären Energieträgerfluids gesteigert werden kann.

Für eine besonders wirkungsvolle Aufspaltung des Ammoniaks ist vorgesehen, dass die Abtrenneinheit für den molekularen Stickstoff vorzugsweise ein Filter mit zumindest Anteilen von Palladium oder einer Palladiumlegierung umfasst.

Eine mit gutem Wirkungsgrad und guten Abgaswerten betreibbare Maschine oder Anlage zur Erzeugung von elektrischer, thermischer oder kinetischer Energie, insbesondere einer Verbrennungskraftmaschine und/oder Brennstoffzelle, deren Brennstoff auch einfach und sicher gelagert bzw. mitgeführt werden kann, ist mit einem Tank oder einer Zuleitung für ein Brenngas, allenfalls einer Zuleitung für Verbrennungsluft und allenfalls einer Abgasreinigungseinrichtung, vorzugsweise einem Katalysator, ausgestattet und erfindungsgemäß dadurch gekennzeichnet, dass eine Vorrichtung zur Herstellung von Brenngas aus einem primären Energieträger gemäß einem der vorhergehenden Absätze vorgeschaltet ist.

Für besonders gute Emissionswerte kann die Maschine oder Anlage in einer Ausführungsform ausgelegt werden, bei welcher der Auslass für die Verbrennungsabgase mit einer selektiven katalytischen Reduktionsstufe mit Ammoniak als Reduktionsmittel verbunden ist, und wobei der Tank oder die Zuleitung für verflüssigten Ammoniak vorzugsweise über eine Dosiereinheit mit der Reduktionsstufe verbunden ist. Da auch Brennstoffzellen in bestimmter Bauart Stickoxide ausstossen könne, ist auch hier die selektive katalytische Abgasreinigung anwendbar und von Vorteil.

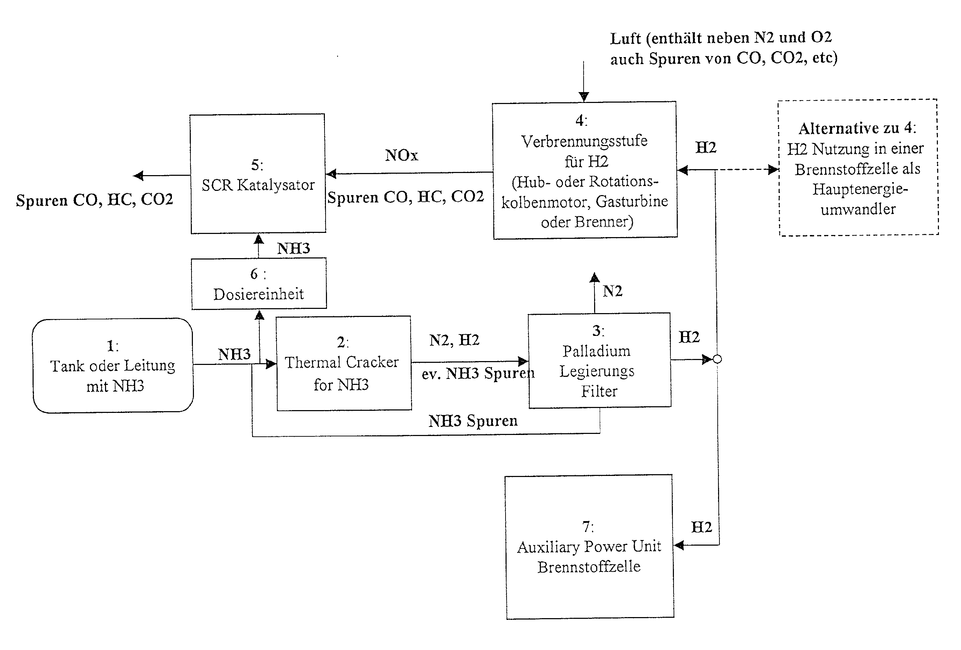

In der nachfolgenden Beschreibung soll die Erfindung unter Bezugnahme auf die beigefügte Zeichnung näher erläutert werden, welche ein Flussdiagramm der erfindungsgemäßen Energiekonverterkette mit Ammoniak als Ausgangsstoff und unter Verwendung einer Verbrennungskraftmaschine bzw. von Brennstoffzellen darstellt.

Aus einem Niederdrucktank 1 (vergleichbar mit LPG-Tanks) oder einer Niederdruckleitung wird der zur Verfügung gestellte Ammoniak einem thermischen Cracker 2 zugeführt. Im Tank 1 liegt der Ammoniak dabei vorzugsweise in flüssiger Form vor und wird dann durch etwa ein Reduktionsventil in den gasförmigen Zustand übergeführt. Beim thermischen Cracker handelt es sich vorzugsweise um ein mit externer Energie aufgeheiztes katalytisches Strömungsfeld, wobei in bekannter Weise als Katalysator eine Reihe von Materialien in Frage kommen. In der Praxis haben sich Pt oder Rt besonders gut bewährt. In diesem katalytischen Umfeld zerfällt NH₃ vollständig in H₂ und N₂ abhängig von den Druckverhältnissen bei Temperaturen zwischen 800°K und 1200°K.

Diesem Cracker 2 ist vorteilhafterweise ein aus einer Palladiumlegierung (Pd/Ag, Pd/Cu/Ag, oder ähnliches) oder einer Legierung eines in seinen Eigenschaften ähnlichen Materials, vorzugsweise Metalls, hergestellter Filter in einer Stickstoffabtrenneinheit 3 nachgeschaltet. Der Filter ist dabei vorzugsweise als Membranfilter ausgebildet, könnte aber auch in bekannter Wabenstruktur aufgebaut sein. Die Einheit 3 ist so ausgebildet, dass lediglich die H₂-Moleküle des Brenngases passieren können. Der Stickstoff kann abgeschieden und an die Umgebungsluft abgegeben werden. Sollten sich noch Spuren von Ammoniak im Brenngas befinden, werden sie ebenfalls hier abgeschieden und vorteilhafterweise den Cracker 2 rückgeführt werden. Dies ist insbesonders bei PEM-Brennstoffzellen von Bedeutung, die sehr Ammoniakempfindlich sind und durch geringste Spuren davon schon irreversibel beschädigt werden können.

Der Wasserstoff, der am Ausgang des Filters 3 zur Verfügung steht, kann nun entweder einer Verbrennungsstufe 4 zugeführt werden und zwar in jeder Form (stationäre Brenner, Hubkolben- und Rotationskolbenmotoren, aber auch Gasturbinen). Da die Verbrennung von Wasserstoff bei hohen Temperaturen abläuft, entstehen bei der Verbrennung mit Umgebungsluft Stickoxide. Im Falle einer Verbrennung in von Schmiermitteln benetzten Brennräumen (Hubkolben- und Rotationskolbenmaschinen) können auch aus den Schmiermitteln HC-Emissionen entstehen. Diese machen bei modernen Motoren jedoch nur mehr sehr geringe Mengen aus. Da die zur Verbrennung angesaugte Luft auch bereits Spuren von CO, CO₂ und HC enthält ist ein Weitertransport in das Abgas nicht auszuschließen.

Das Hauptproblem einer hocheffizienten Verbrennung ist jedoch die oben genannte Entstehung von Stickoxiden. Die Beseitigung von Stickoxiden erfolgt in der Regel in einer Abgasreinigungseinheit 5 über eine besondere Reaktion, die sogenannte selektive katalytische Reduktion (SCR). Diese erfordert jedoch ein Reduktionsmittel, wobei dafür der Ammoniak herangezogen werden kann, der in bisherigen Ausführungen in anderem Zusammenhang stets mit erhöhtem Aufwand und Gewicht in einem separaten Tank (typisch als Wasser-Harnstofflösung oder Ammonium-Carbamat) bereitgestellt oder mitgeführt werden muss. Im Falle der in der Erfindung beschriebenen Konfiguration ist der Ammoniak bereits als primäres Energieträgerfluid und Kraftstoff vorhanden, beispielsweise im Vorratsbehälter 1 an Bord und muss lediglich dem SCR Katalysator der Einheit 5 zugeführt werden. Dann ist bei entsprechend genauer Dosierung, vorzugsweise durch eine separate Dosiereinheit 6, eine vollständige Entstickung und damit ein Niedrigst-Emissionsbetrieb der Energieumwandlungskette möglich.

Der Wasserstoff am Ausgang des Palladium-Filters 3 ist jedoch auch von einer Brennstoffzelle nutzbar; entweder als Nebenstromaggregat 7, welches sämtliche Nebenaggregate antreibt (=Ersatz für Lichtmaschine/Alternator) oder alternativ zur Verbrennungsstufe 4 als Hauptenergieumwandler 4a von Wasserstoff in elektrische Energie.

In der Anwendung für beispielsweise Fahrzeuge mit Klimaanlagen oder andere Anwendungen mit Bedarf für eine Kühlung kann das als Energieträger ohnedies vorhandene NH3 als Kältemittel eingesetzt werden, da es unter Druck zur Verfügung steht.

## Patentansprüche

1. Verfahren zur Herstellung von Brenngas, insbesondere für eine Verbrennungskraftmaschine oder eine Brennstoffzelle, bei welchem ein Energieträgerfluid durch chemische und/oder physikalische Prozesse umgewandelt und allenfalls gereinigt wird, **dadurch gekennzeichnet, dass** Ammoniak als primäres Energieträgerfluid einem thermischen Cracking-Prozeß unterworfen und unter katalytischer Aufspaltung in molekularen Wasserstoff und molekularen Stickstoff als Brenngasmischung umgewandelt wird.

2. Verfahren nach Anspruch 1, **dadurch gekennzeichnet, dass** verflüssigter Ammoniak als Energieträgerfluid verwendet und vor dem Cracking-Prozeß verdampft wird.

3. Verfahren nach Anspruch 1 oder 2, **dadurch gekennzeichnet, dass** der thermische Cracking-Prozeß unter Verwendung eines Platin- und/oder Ruthenium-Katalysatormaterials durchgeführt wird.

4. Verfahren nach Anspruch 1, 2 oder 3, **dadurch gekennzeichnet, dass** der thermische Cracking-Prozeß bei einer Temperatur zwischen 500°C und 1500°C stattfindet, vorzugsweise zwischen 800°C und 1200°C.

5. Verfahren nach zumindest einem der vorhergehenden Ansprüche, **dadurch gekennzeichnet, dass** anschließend an den thermischen Cracking-Prozeß der molekulare Stickstoff zumindest teilweise abgetrennt wird.

6. Verfahren nach Anspruch 5, **dadurch gekennzeichnet, dass** die Abtrennung des molekularen Stickstoffs in einer Filterstufe durchgeführt wird.

7. Verfahren nach Anspruch 5 oder 6, **dadurch gekennzeichnet**, das die Abtrennung des molekularen Stickstoffs unter Verwendung von Palladium oder einer Palladiumlegierung durchgeführt wird.

8. Verfahren zum Betreiben einer Maschine oder Anlage zur Erzeugung von elektrischer, thermischer oder kinetischer Energie, insbesondere einer Verbrennungskraftmaschine und/oder einer Brennstoffzelle, bei welcher die in einem Brenngas, allenfalls aus einem Energieträgerfluid durch chemische und/oder physikalische Prozesse und allenfalls nach einer Reinigung bereitgestellt, enthaltene chemische Energie umgewandelt wird, **dadurch gekennzeichnet, dass** das Brenngas mittels eines Verfahrens gemäß einem der Ansprüche 1 bis 7 bereitgestellt wird.

9. Verfahren nach Anspruch 8, **dadurch gekennzeichnet, dass** die Abgase der Maschine oder Anlage zur Energieerzeugung einer selektiven katalytischen Reduktion mit vorzugsweise Ammoniak als Reduktionsmittel unterzogen werden.

10. Verfahren nach Anspruch 9, **dadurch gekennzeichnet, dass** der Ammoniak für die selektive katalytische Reduktion vom Strom des primären Energieträgerfluids vor dem thermischen Cracking-Prozeß abgezweigt und der Reduktionsstufe zugeführt wird.

11. Vorrichtung zur Herstellung von Brenngas, insbesondere für eine Maschine oder Anlage zur Erzeugung von elektrischer, thermischer oder kinetischer Energie, insbesondere für eine Verbrennungskraftmaschine (4) und/oder eine Brennstoffzelle (4a, 7), umfassend einen Tank oder eine Zuleitung für ein primäres Energieträgerfluid, und allenfalls eine Reinigungseinheit (5), **gekennzeichnet durch** einen Tank (1) oder eine Zuleitung für Ammoniak als primäres Energieträgerfluid und einen thermischen Cracker (2) für Ammoniak.

12. Vorrichtung nach Anspruch 11, **dadurch gekennzeichnet, dass** ein Tank (1) für verflüssigten Ammoniak und ein dem thermischen Cracker (2) vorgeschalteter Verdampfer vorgesehen sind.

13. Vorrichtung nach Anspruch 12, **dadurch gekennzeichnet, dass** der Cracker (2) ein Katalysatormaterial enthält.

14. Vorrichtung nach Anspruch 13, **dadurch gekennzeichnet, dass** das Katalysatormaterial Platin- und/oder Ruthenium enthält.

15. Vorrichtung nach einem der Ansprüche 11 bis 14, **dadurch gekennzeichnet, dass** eine Abtrenneinheit (3) für zumindest einen Teil des molekularen Stickstoffs dem thermischen Cracker (2) nachgeschaltet ist.

16. Vorrichtung nach Anspruch 15, **dadurch gekennzeichnet, dass** die Abtrenneinheit (3) ein Filter mit zumindest Anteilen von Palladium oder einer Palladiumlegierung umfasst.

17. Maschine oder Anlage zur Erzeugung von elektrischer, thermischer oder kinetischer Energie, insbesondere Verbrennungskraftmaschine (4) und/oder Brennstoffzelle (4a, 7), mit einem Tank (1) oder einer Zuleitung für ein Brenngas, allenfalls einer Zuleitung für Verbrennungsluft und allenfalls einer Abgasreinigungseinrichtung (5), vorzugsweise einem Katalysator, **dadurch gekennzeichnet, dass** eine Vorrichtung zur Herstellung von Brenngas gemäß einem der Ansprüche 11 bis 16 vorgeschaltet ist.

18. Maschine oder Anlage nach Anspruch 17, **dadurch gekennzeichnet, dass** der Auslass für die Abgase mit einer selektiven katalytischen Reduktionsstufe (5) mit Ammoniak als Reduktionsmittel verbunden ist, und dass der Tank (1) oder die Zuleitung für Ammoniak vorzugsweise über eine Dosiereinheit (6) mit der Reduktionsstufe (5) verbunden ist.
